Europäisches Patentamt

European Patent Office

Office européen des brevets

(11) Publication number: **0 398 445**
**A1**

(12) **EUROPEAN PATENT APPLICATION**

(21) Application number: **90201251.7**

(22) Date of filing: **17.05.90**

(51) Int. Cl.5: **A01C 23/02**

(30) Priority: **18.05.89 NL 8901232**

(43) Date of publication of application:
**22.11.90 Bulletin 90/47**

(84) Designated Contracting States:
**AT BE CH DE DK ES FR GB GR IT LI LU NL SE**

(71) Applicant: **KAMPS-DE WILD B.V.**
**Edisonstraat 10**
**NL-6902 PK Zevenaar (Gld.)(NL)**

(72) Inventor: **Gorter, Alexander Lucas**
**Oenenburgweg 55**
**NL-8072 HG Nunspeet(NL)**

(74) Representative: **Noz, Franciscus Xaverius, Ir.**
**et al**
**Algemeen Octrooibureau P.O. Box 645**
**NL-5600 AP Eindhoven(NL)**

(54) **Device for putting manure into the soil.**

(57) The invention relates to a device for putting manure into the soil, said device being provided with a plurality of cutting means (23) located side by side, when seen in the intended direction of movement of the device during operation. Cuts are made into the ground by means of said cutting means while the device moves forward. The device furthermore comprises injecting means, which are provided with outlets (21, 22) moving in the cuts behind the cutting means during operation, said outlets being connected to a supply mechanism (15) for supplying manure. The supply mechanism is provided with means for moving manure, which each move a certain quantity of manure per time unit and which are in communication with certain injecting means.

Fig.1.

EP 0 398 445 A1

## Device for putting manure into the soil

The invention relates to a device for putting manure into the soil, said device being provided with a plurality of cutting means located side by side, when seen in the intended direction of movement of the device during operation, by means of which cuts can be made into the ground while the device moves forward, and with injecting means, which are provided with outlets moving in the cuts behind the cutting means during operation, said outlets being connected to a supply mechanism for supplying manure.

With known devices of this kind the injecting means are connected to a central discharge of the supply mechanism. In practice it has become apparent that it is not possible hereby to achieve an equal distribution of the manure supplied over the various injecting means.

The object of the invention is therefore to obtain a device of the above kind, wherein said drawback of the known device can be overcome.

According to the invention this can be accomplished in that the supply mechanism is provided with means for moving manure, which each move a certain quantity of manure per time unit and which are in communication with certain injecting means.

By using the construction according to the invention an even distribution of the manure into the soil can be accomplished in a simple manner.

The invention will be further explained hereinafter with reference to a diagrammatic embodiment of the device according to the invention diagrammatically illustrated in the accompanying figures.

Figure 1 is a diagrammatical illlustration of the arrangement of various parts of the device according to the invention.

Figure 2 is a side elevational view of a cutting means formed by a cutting wheel and an injecting means arranged therebehind.

Figure 3 is a side elevational view of Figure 2.

Figure 4 is a perspective view of a pair of coupled cutting means, which co-operate with a pair of injecting means arranged side by side in the manner according to Figure 3.

Figure 5 is a diagrammatic view of a reducing mechanism for bulky material present in the manure.

Figure 6 is a diagrammatic view of a mechanism for removing heavy materials from the manure.

As is diagrammatically illustrated in the figures the device comprises a driving source 1, e.g. in the shape of a hydromotor. A shaft 4 is coupled to the outgoing shaft 2 of the driving source by means of a coupling 3, said shaft 4 extending through a casing 5.

On said casing 5 there is provided a stub 6, via which manure to be processed can be supplied to the casing 5.

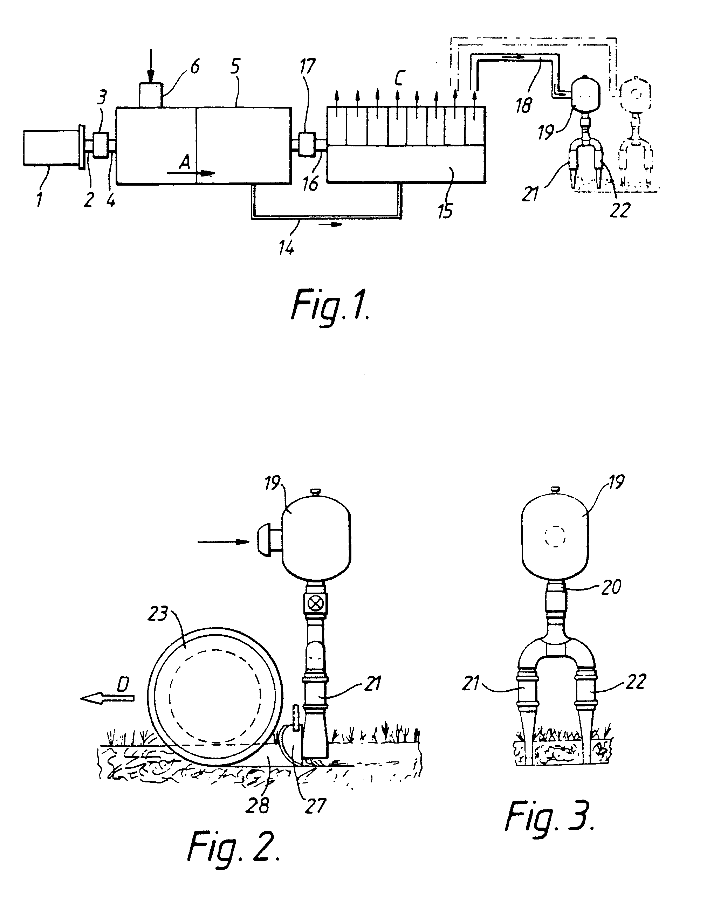

In the left-hand part of the casing 5, seen in Figure 1, to which said stub 6 is connected, a plurality of scraping means 7 are secured to the shaft 4. Said scraping means extend through slots 8, which are provided in a curved partition 9, which surrounds the shaft 4 and whose ends are connected to a wall of the casing 5.

The manure, which is supplied to the left-hand part of the casing 5 via the stub 6, must move through the slots 8 in the plate 9 in order to be able to flow on towards the part of the casing 5 located furthest to the right, seen in Figure 1, as is indicated by means of the arrow A. The slots 8 are thereby dimensioned such that parts larger than 12 mm are stopped. The scrapers 7 rotating during operation will grind fine any larger parts, so that said parts can be passed through the pump to be described hereinafter without any difficulty.

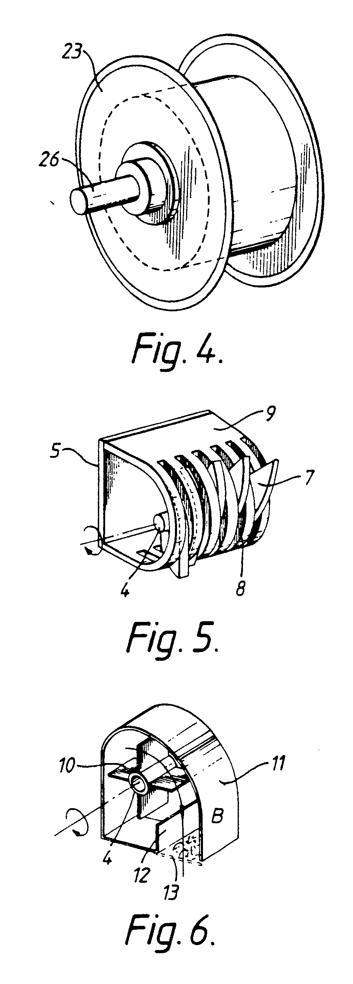

In the part of the casing 5 located furthest to the right there is arranged the separating mechanism diagrammatically illustrated in Figure 6. Said separating mechanism comprises a plurality of blades 10 secured to the shaft 4 and extending at least substantially radially, which will rotate through the manure supplied during operation. As is furthermore illustrated in Figure 6 the shaft part 4 provided with blades 10 is surrounded by a curved wall 11, which forms the boundary wall of a kind of volute, which surrounds the impeller formed by the shaft 4 and the blades 10.

The ends of the wall 11 are secured to the bottom of the casing 5, whilst between said ends of the wall 11, on the bottom of the casing 5, there is secured a partition 12 extending upwardly and parallel to the central axis of the shaft 4.

Heavier materials, such as e.g. bolts, nuts or the like waste possibly present in the manure supplied will be caught by the blades 10 and, as indicated by means of the arrow B, be flung into the room which is located between the upwardly extending partition 12 and the right-hand lower part of the curved wall 11, seen in Figure 6. Said room is bounded at its lower side by a detachable part 13 of the bottom of the casing 5, so that at set intervals such waste material can be removed from the casing 5 by removing the detachable bottom part 13.

The manure thus pre-treated is then supplied from the casing 5, via a pipe 14, to a pump 15. The driving shaft 16 of said pump is connected, via a coupling 17, to the right-hand end, seen in Figure 1, of the shaft 4 projecting from the casing 5.

The pump 15 forms a supply mechanism for the manure, which is provided with a plurality of manure moving means, which each move a certain quantity of manure per time unit. Such a pump has preferably a constuction such as e.g. described in European Patent Application 0170039. By means of such a pump the manure supplied to the pump can be transported in a number of at least substantially equal partial flows. As is diagrammatically indicated by means of arrows C in Figure 1 use is made of a pump in the illustrated embodiment, said pump supplying, the manure supplied via the pipe 14, in eight partial flows to pipes 18 connected to the discharge side of the pump.

Each of said pipes is connected to a vessel 19 in the upper part, in which an air buffer is maintained during operation.

In the illustrated embodiment a pair of injecting means 21 and 22 are connected to each vessel 19 by means of a connecting pipe 20. This means, therefore, that in the illustrated embodiment a total of sixteen injecting means will be connected to the pump 15, which will be located side by side, when seen in the intended direction of movement of the device during operation according to the arrow D (Figure 2).

Seen in the direction of movement a cutting means 23, 24 respectively, in the shape of a circular knife or so-called coulter, is thereby arranged in front of each injecting means 21, 22.

A pair of knives 23 and 24 are mutually connected by a drum 25 located therebetween and secured to a shaft 26, which can be rotated during operation in a manner not shown.

As is illustrated in Figure 2 the knives will thereby make cuts 28 in the ground when moving in the direction according to arrow D. The depth of said cuts is determined by the difference in diameter between the drum 25 and the circular knives 23 and 24, since the drum 25 rolls on the ground surface during operation, as will be apparent from Figure 2.

The drums 25 with the knives 23 and 24 secured thereto are preferably spring-mounted in vertical direction on the frame carrying the various parts of the above-described device, so that the drum 25 with the knives secured thereto can easily follow any unevennesses in the ground, without exerting undesirable forces on the frame thereby.

As will furthermore be apparent from Figures 2 and 3 the design of the injecting means is thereby such that the outlet located near the bottom end of the injecting means moves at a short distance from the bottom of the cut formed by the cutting means moving in front of the injecting means in question. Furthermore each injecting means is provided with a dragfoot 27 consisting of a wear resistant material which moves in front of the outlet, said dragfoot ensuring a good guiding of the outlet end of the injecting means in the cut 28 formed by the cutting means in question.

During operation substantially equal quantities of manure will be supplied to the various vessels 19 per time unit, by means of the pump 15.

The pump, as described in European Patent 0170039 operates in surges. By using the vessel 19 with the air buffer accommodated therein a substantially continuous flow of manure to the injecting means 21 and 22 connected with the vessel 19 in question is still obtained, however.

Of course it will be possible to connect a single injecting means to each vessel, but in practice it has become apparent that a sufficiently equal manuring is still obtained when two injecting means are connected to one vessel.

As already mentioned before the manure supplied to each vessel 19 will be put under the upper surface of the sward or the like via the injecting means.

Thus, by using the device according to the invention, the manure is not only put into the soil, particularly evenly distributed, in grooves spaced from each other by a desired distance, but also the occurrence of stench nuisance is prevented, whilst the manure will not come into contact with the air, which will prevent the occurrence of disadvantageous acidifying effects.

Putting the manure under the ground surface at the same time prevents burning of the grass or the like in sunny weather, such as will occur when the manure is spread across the ground surface.

The frame of the device is preferably provided with coupling means with which the device can be coupled to a tank trailer containing manure, which can be connected to the above-mentioned stub 6 via a pipe.

## Claims

1. Device for putting manure into the soil, said device being provided with a plurality of cutting means located side by side, when seen in the intended direction of movement of the device during operation, by means of which cuts can be made into the ground while the device moves forward, and with injecting means, which are provided with outlets moving in the cuts behind the cutting means during operation, said outlets being connected to a supply mechanism for supplying manure, characterized in that the supply mechanism is provided with means for moving manure, which each move a certain quantity of manure per time unit and which are in communication with certain injecting means.

2. Device according to claim 1, characterized in that said supply mechanism is formed by a pump provided with several pumping means, which supply the manure supplied to the pump to separate outlet means.

3. Device according to claim 1 or 2, characterized in that said injecting means are connected to buffer vessels to which the manure is supplied by means of the supply mechanism and in which there is contained an air cushion in order to damp pulsating movements of the manure. `

4. Device according to any one of the preceding claims, characterized in that said device is provided with a casing connected in front of the supply mechanism, on which there is provided a connection for the supply of manure and in which there is located a grate provided with slots, through which scraping means rotate, all this in such a manner that the manure supplied must flow toward the supply mechanims via said grate.

5. Device according to any one of the preceding claims, characterized in that in the casing there is arranged a rotating means provided with blades, by means of which heavier objects possibly present in the manure can be flung from the manure into a receiving room.

6. Device according to any one of the preceding claims, characterized in that , seen in the direction of movement of the device during operation, a pair of knives are arranged in front of each injecting means, said knives cutting a groove into the ground on both sides of the path travelled by said injecting means.

7. Device according to claim 6, characterized in that said pair of circular knives is secured to a drum connecting said knives, said drum being rotatable about a horizontal axis of rotation extending perpendicularly to the longitudinal axis of the device.

8. Device according to claim 6 or 7, characterized in that said knives are vertically movable against spring pressure.

9. Device according to any one of the claims 6 - 8, characterized in that between said knives and said injecting means there is arranged a guide means for the injecting means, said guide means being arranged in front of said injecting means.

Fig.1.

Fig. 2.

Fig. 3.

Fig. 4.

Fig. 5.

Fig. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | BE-A-902697 (KURSTJENS)<br>* the whole document * | 1, 2 | A01C23/02 |
| X | EP-A-246346 (ANSINK)<br>* the whole document * | 1 | |
| A | | 4, 6, 8 | |
| A | DE-A-2017530 (LUZZ)<br>* claim 3 * | 1 | |
| P,A | EP-A-322941 (DE VREE)<br>* column 2, lines 24 - 43 *<br>* column 3, lines 32 - 57 * | 1, 4-8 | |
| D,A | EP-A-170039 (VERHULSDONK)<br>* the whole document * | 2 | |
| A | FR-A-2208274 (ROLLAND)<br>* the whole document * | 1, 9 | |
| A | FR-A-2028949 (VAN DER LELY)<br>* page 3, lines 31 - 35 * | 3 | TECHNICAL FIELDS SEARCHED (Int. Cl.5 ) |
| A | FR-A-2261697 (JEULIN)<br>* the whole document * | 4 | A01C |
| A | NL-A-7511421 (KAMPS-DE WILD)<br>* the whole document * | 4 | |
| A | NL-A-8500816 (VEENHUIS MACHINES)<br>* the whole document * | 4, 5 | |
| A | GB-A-1068895 (MASSEY-FERGUSON)<br>* page 2, lines 19 - 22 * | 6 | |
| A | US-A-2912944 (SNOW)<br>* column 1, line 69 - column 2, line 57 * | 6, 8 | |

-/--

The present search report has been drawn up for all claims

| Place of search | Date of completion of the search | Examiner |
|---|---|---|
| THE HAGUE | 22 AUGUST 1990 | DE LAMEILLIEURE D. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-E-25307 (JOHNSTON)<br>* column 5, lines 3 - 28 *<br>* column 5, lines 53 - 63 *<br>--- | 8, 9 | |
| A | FR-A-1008345 (BATAAFSCHE PETROLEUM MAATSCHAPPIJ)<br>--- | | |
| A | DE-A-1902309 (DIRECT NITROGEN)<br>--- | | |
| A | US-A-4528919 (HARBOLT)<br>--- | | |
| A | US-A-3292562 (CLARK)<br>--- | | |
| A | US-A-4574715 (DIETRICH)<br>--- | | |
| A | US-A-3319589 (MORAN)<br>------ | | |

TECHNICAL FIELDS SEARCHED (Int. Cl.5)

The present search report has been drawn up for all claims

| Place of search | Date of completion of the search | Examiner |
|---|---|---|
| THE HAGUE | 22 AUGUST 1990 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)